# EUROPEAN PATENT APPLICATION

(11) **EP 4 840 837 A1**
(43) Date of publication of application: **18.11.2026**
(21) Application number: 25176970.9
(22) Date of filing: 16.05.2025
(51) Int. Cl.: C04B 35/56, C01B 32/914, C01B 32/921, C01B 32/949, C04B 35/626, H01M 8/00

(54) **PROCESS FOR PREPARING A TRANSITION METAL CARBIDE, THE SO-OBTAINED TRANSITION METAL CARBIDE AND THE USE THEREOF AS ELECTROCONDUCTIVE PARTICLES, IN PARTICULAR AS ELECTROCONDUCTIVE FILLER MATERIALS FOR COATED METALLIC BIPOLAR PLATES IN FUEL CELLS**

(71) Applicant: Studiengesellschaft Kohle gGmbH, 45470 Mülheim (DE); EKPO Fuel Cell Technologies GmbH, 72581 Dettingen/Erms (DE)
(72) Inventor: SCHÜTH, Ferdi, 45470 Mülheim an der Ruhr (DE); AGBABA, Özgül, 45470 Mülheim an der Ruhr (DE); MEYERS, Jil, 51379 Leverkusen (DE); SCHWEIZER, Patrick, 72581 Dettingen an der Erms (DE); HÖFLICH, Alexander, 72581 Dettingen an der Erms (DE)
(74) Representative: Seyer & Nobbe Patentanwälte PartmbB

(57) **Abstract**

The present invention refers to a process for preparing a transition metal carbide, the so-obtained transition metal carbide and the use thereof as electroconductive particles, in particular as filler material for coated metallic bipolar plates (BPP) in fuel cells PEMFC; and the fuel cells making use of the so-obtained BPP.

## Description

The present invention refers to a process for preparing a transition metal carbide, the so-obtained transition metal carbide and the use thereof as electroconductive particles, in particular for electric devices such as batteries or as filler materials for coated metallic bipolar plates (BPPs) in fuel cells, such asproton exchange membrane fuel cells (PEMFCs); and the fuel cells making use of the so-obtained BPPs.

The global increase in energy consumption and the pollution of the environment generated by the use of fossil fuels are driving the demand for clean and sustainable energy applications. In recent years, fuel cell technology has attracted much attention as a promising solution. Among various types of fuel cells, the PEMFC has been identified as an alternative environmentally friendly power source for the transportation sector due to its high power density, efficiency, near-zero emissions and low operating temperature. BPPs, which account for a large proportion of the total weight and manufacturing cost of fuel cell stacks, are one of the key multi-functional components of a PEMFC. BPPs, in particular, are components of fuel cell stacks in fuel cells and preferably serve to separate the media, such as reaction gases and coolant, and to distribute the reaction gases by means of flow fields via the electrochemically active surface of each fuel cell unit of the fuel cell stack, as well as for electrical conduction via the electrical fuel cell units connected in series in the fuel cell stack.. In addition, reaction heat is dissipated or transferred to the coolant through the BPP units.

Stainless steel BPPs have attracted commercial interest since they have high mechanical strength, good chemical stability and low fabrication cost. However, low corrosion resistance in PEMFC environment and high interface resistance remain still major concerns.

In order to ensure sufficient corrosion resistance under the respective electrochemical conditions, a coating of the surfaces of a main body of the bipolar plate facing the membrane electrode assembly (MEA) in the assembled state is generally necessary.

In the prior art, several proposals for improving the BPPs have been made. For example, WO22033974A1 proposes that the bipolar plate comprises an electrically conductive main body and an electrically conductive coating, wherein the electrically conductive coating comprises a binding material and one or more electrically conductive fillers, and wherein a pigment volume concentration in the coating corresponds at least to a pigment volume concentration required to achieve a percolation threshold in order to provide a bipolar plate that has optimized electrical conductivity and can be produced as easily as possible, the invention.

However, there is still the need to improve the conductivity properties of the BPPs.

The present inventors have found that a high-energy planetary ball milling technique making use of a scalable mill such as a scalable attritor mill is an effective method for preparing fine and homogeneous ceramic filler materials used for coating of metallic bipolar plates in PEMFCs. For this purpose, the inventors have identified scalable attritor mills to be useful for the inventive method, in particular such as Simoloyer^{®} (by Zoz GmbH), to be suitable for the inventive milling process when the conditions as defined are maintained for the milling loads and vessels.

A scalable mill in the sense of the invention is a mill making use of the same milling principle being useful in various sizes, starting with a vessel of 1L content up to 100L or even more vessel content. An example for such a scalable mill is an attritor mill, said mill having a vessel and a rotor with blades which form, sizes and number are adjusted to the vessel chamber and which rotor is operated with rotations speeds to act with high kinetic energy impact and shear forces on the millings load to achieve effective milling. When the rotor of said scalable attritor mill spins, the attached blades propel the grinding media such as grinding bodies or balls at high speeds inside the milling chamber, reaching up to several hundreds to thousands of rpm. These high rotational speeds enable the grinding balls to collide intensely, transferring energy to the powder particles trapped between them or against the chamber walls. Through repeated collisions, particles undergo deformation, fracture, and cold-welding, which leads to size reduction, structural refinement, and potential alloy formation. In the inventive process, the effective energy per collision per gram of ball should be in the range of 5-50 mJ to ensure producing the desired transition metal carbide with the intended properties. An exemplary route for calculating the collision energy is presented in the Experimental Part below. This high-energy environment is ideal for producing ultrafine particles, and furthermore, the controlled atmosphere capability allows for milling under vacuum or inert gases, crucial for synthesizing reactive or contamination-sensitive materials. The above explanation of a scalable mill should not be understood as limiting the kind of the scalable mill as long as the kind of mill is suitable to mill the starting materials to a fine powder on the basis of the same milling principle used in mill with a nominal volume of 1l up to a size of a few hundred liters content of the milling vessel.

As exemplified for the Simoloyer^{®}, said mill is a high-energy ball milling machine which is an attritor mill unlike traditional mills and which has a horizontal rotor-stator design, which enhances energy transfer efficiency and creates effective milling conditions. A horizontal rotor-stator design is not mandatory and other designs such as a vertical or inclined design are options. Said Simoloyer mill usually comprises several components, including a horizontally oriented cylindrical milling chamber that can range from 0.5 to 900 liters in capacity.

Unlike WO22033974A1, which relies on percolation thresholds for conductivity, the present invention employs a mechanochemical route to synthesize conductive fillers with tailored particle size distributions, improved homogeneity, and enhanced conductivity. This method eliminates the need for additional thermal treatments or chemical processing, reducing cost and energy consumption.

Transition metal carbides (TMCs) are a diverse class of materials with many technological applications. These materials are valued for their exceptional robustness, remarkable durability, and a multitude of remarkable attributes. In particular, they show a similarity to noble metals in certain catalytic reactions, and their impressive electrical conductivity underline their importance in various contexts. Since the observation that tungsten carbide has catalytic properties similar to those of platinum, there has been considerable interest in comparing the electronic structure of carbides to those of metals. TMCs are characterized by their exceptional hardness and remarkable wear resistance. This makes them highly desirable for applications in cutting tools, drills, inserts and other important wear-resistant components that are essential in industries such as machining, mining, and construction. Their usefulness extends into the field of advanced ceramics and refractories, where their high melting points, high chemical stability, and resistance to thermal shocks are exploited. These properties make them suitable for applications involving high temperatures, such as constructing furnace linings, designing crucibles, and addressing other demanding high-temperature environments. Significantly, the aerospace and energy sectors hold great promise for the use of these materials in components subject to extreme thermal conditions.

**Table 1** shows the physical properties of target TMCs, including the melting point, electrical conductivity and hardness values. Diamond is the hardest known material, and stands alone between the TMCs and Al₂O₃. The materials are hard, strong, and somewhat brittle, and resemble ceramics rather than metals. However, the electronic and magnetic properties of the TMCs provide an interesting contrast, as there are similarities with the metals.

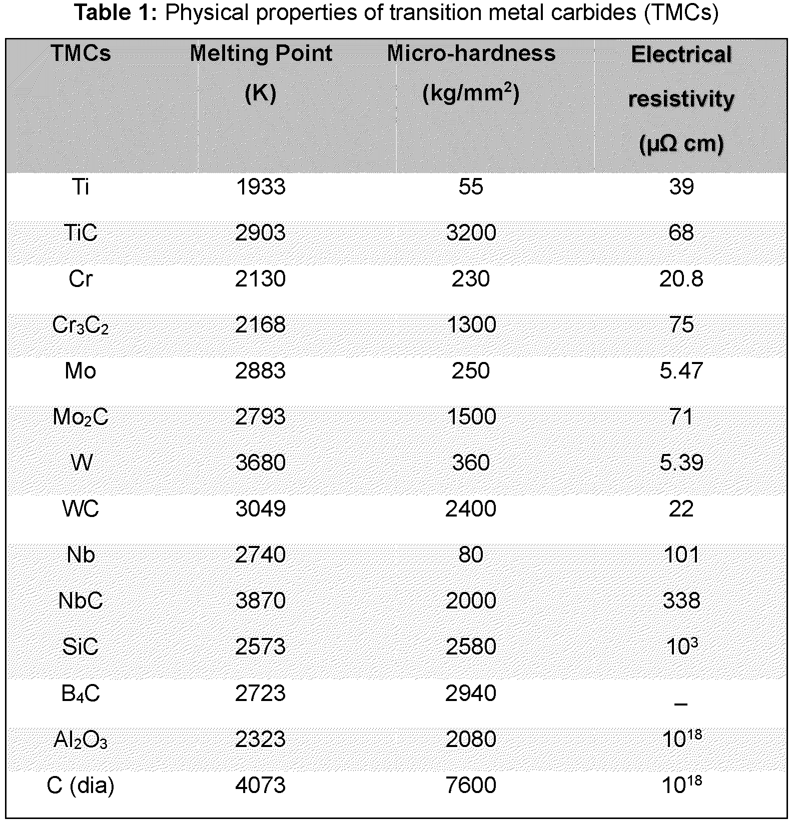

Table 1 above also compares the electrical resistivity of the elements and compounds at room temperature. Although the TMCs have higher electrical resistivity than the pure metals (conductors typically have resistivity in the range 1O⁻²-10³ µΩ cm), they still fall into the range of metallic conductors. In comparison, the ceramic materials have much higher resistivity values, and are typically insulators (resistivity of insulators is about 10¹³-10¹⁸ µΩ cm). As a result, TMCs can also be used as conductive filler materials in BPPS, which play a prominent role in fuel cell technology, especially in PEMFCs. These BPPS, which are essential components of a fuel cell stack, have the dual function of electrically connecting the individual cells and simultaneously controlling the distribution of the reactants (hydrogen and oxygen). At the same time, they are responsible for the removal of the product water and the control of thermal aspects within the fuel cell system.

Several methods have been developed for the preparation of TMCs, some of which are used on a large scale for commercial production. These processes as listed in Table 2 below generally use high temperature processes and therefore produce materials with low surface area. The temperature required is in the range of 1500-2300 °C, and fossil fuels are traditionally used to reach the target temperature. Another drawback is that the gas atmosphere for the synthesis is reductive, containing hydrogen and sometimes methane, which involves the risk of explosions. The starting materials can be pure metals or oxide forms. The reaction of metal oxides with carbon proceeds by reduction of the oxide to the metal, followed by diffusion of carbon into the metal, or by reduction of the oxide to a suboxide, followed by formation of an oxycarbide.

**Table 2: State of the art methods of TMCs.**

| **The traditional synthesis methods** | **Chemical reactions** |
|---|---|
| **Synthesis Methods of TMCs** | *M + C* → *MC* |
| **M:Metal** | *MO + 2C* → *MC + CO* |
| **C:Carbon** | *M + 2CO* → *MC + CO₂* |
| **MC:MetalCarbide** | *MO + 2CH₄* → *MC + CO + 4H₂* |
| **MO:MetalOxide** | *MoCl*₄(*thf*)₂ *+ LiBEt*₃*H* → *Mo*₂*C* |

The demand for sustainable manufacturing processes is driven by growing environmental concerns and limited energy resources. Alternative syntheses, which use the effects of mechanical forces to induce chemical reactions, offer a simple and effective way to synthesise metal carbides. In this synthesis route of the present invention, elemental metals and a carbon source (e.g. graphite, carbon nanotubes or activated carbon) are mechanochemically reacted with each other at room temperature.

Noble metals such as gold and platinum are the most commonly used coatings for metallic BBP. However, in order to minimise the cost of the protective layers, alternative materials such as transition metal carbides and nitrides, conductive polymers and carbon materials have been investigated. Among the carbides, titanium and chromium carbides have been widely used as coating materials to reduce the interfacial resistance while improving the chemical stability of the plates. These coatings are all applied by physical vapor deposition techniques, including multi-arc ion plating and magnetron sputtering, which form thin, adherent and dense layers on the metal surfaces. All of these methods are time consuming, require high temperatures and a lot of energy, so wet paint processes using suspensions, inks or polymer-based lacquers could be an attractive alternative.

The inventors have developed a mechanochemical synthesis route of ceramic powders in a high-energy ball mill to produce pure single-phase carbides such as titanium carbide TiC, chromium carbide Cr₃C₂, niobium carbide NbC, vanadium carbide VC and molybdenum carbide Mo₂C and nitrides such as TiN. The starting materials were commercially available powders of elemental titanium (purity 99.0 %, particle size < 45 µm), chromium (purity 95.0 %, particle size < 45 µm), niobium (purity 99.8 %, particle size < 45 µm), vanadium (purity 99.8 %, particle size < 45 µm), molybdenum (purity 99.9%, particle size 1-5µm) and graphite (purity 99.0 %, particle size < 16 µm). The powder mixtures with a Ti : C, Nb : C and V : C molar ratio of 1:1, a Mo : C molar ratio of 2:1 and a Cr : C molar ratio of 3:2 were milled for 1.5 - 11 h in a zirconia jar with zirconia balls in a high-energy ball mill Eₘₐₓ under argon atmosphere. The vibration frequency was 1000 rpm and the ball to powder weight ratio ranged from 19:1 to 11:1. In addition, the as-milled chromium-graphite powder mixture was annealed for 2 h at 800 °C under argon atmosphere to produce a single-phase Cr₃C₂.

Thus, the present application is directed to a process for preparing a transition metal carbide, said process comprising the steps of mixing a transition metal powder and a carbon powder in a molar ratio in the range of 1:1 to 2:1, depending on the desired transition metal carbide, and subjecting the obtained mixture to a milling operation in a scalable high-energy mill with a milling vessel in the presence of milling bodies under an inert atmosphere, wherein the milling vessel and the milling bodies are made from stainless steel or preferably a ceramic material, including silicon nitride, aluminum oxide and zirconia, and wherein the transition metal is selected from Ti, Zr, Hf, V, Nb, Ta, Cr, Mo or W.

The mechanical energy applied on the powder mixture in the milling operation should be sufficient to safeguard an efficient milling and thus a homogenous metal carbide and is preferably in the range of 5 - 50 mJ per collision and gram of balls.

The transition metal used for producing the transition metal carbide is selected from early transition metals that form stable carbides typically belonging to groups IV, V, and VI of the periodic table. Said early transition metal is selected from Ti, Zr, Hf, V, Nb, Ta, Cr, Mo or W.

Thus, the transition metal carbides as formed by the inventive process may be Titanium carbide (TiC), Zirconium carbide (ZrC), Hafnium carbide (HfC) , Vanadium carbide (VC), Niobium carbide (NbC), Tantalum carbide (TaC), Chromium carbide (Cr₃C₂, Cr₇C₃, Cr₃C₁) where different phases exist, with Cr₃C₂ being the most common, Molybdenum carbide (Mo₂C, MoC) or Tungsten carbide (WC, W₂C). The preferred carbides are TiC, Cr₃C₂, NbC, VC and Mo₂C. Cr₃C₂ being particularly preferred. At the end of the milling step, the obtained product is taken out of the milling vessel and can be used for the intended purpose. In case of preparing Cr₃C₂, an annealing step in the temperature range of 700°C to 900°C for a time period of 1 to 4 hours will be needed after the milling has been completed in order to have the desired phase purity.

In an embodiment of the process for the production of a transition metal carbide according of the present invention, the milling operation is conducted for a period of time of 2 to 24 hours, preferably 3 to 12 hours and preferably in a temperature range of 20°C to 80°C.

At the end of the milling process, the milling is stopped and the milling product is taken out of the ball mill, optionally sieved to obtain a uniform particle size range and used as a filler material for the polymeric binder of the BPP, which is generally a metallic plate such as a stainless steel plate.

Depending on the desired transition metal carbide, the milling operation is comprising discontinuous milling intervals, optionally with differing milling speeds and differing milling times. Thus, intervals of milling times of 5 to 60 minutes, interrupted by breaks of up to 15 minutes, with differing milling speeds, depending on the ball mill, might be applied.

In order to obtain a homogeneous product, the weight ratio of the milling bodies to the mixture of the transition metal powder and the carbon powder is generally in the range of 50 to 5, preferably 30 to 10, and total volume of the milling bodies to the volume of the vessel of the high-energy ball mill is generally in the range of 1/20 to 1/5, preferably 1/15 to 1/8.

The transition metal carbide obtainable by the inventive process can be advantageously used as electroconductive material, in particular as electroconductive filler material for coated metallic BPPs in fuel cells.

Thus, the present invention is also directed to the transition metal carbide which is obtainable by the inventive process.

The transition metal carbide, which is obtainable by the inventive process is generally having a conductivity in the range of 10-300 S/cm, correlating to a through-plane conductivity in the range of 5-150 mohm*cm².

In one embodiment, the transition metal carbide, which is obtainable by the inventive process, is Cr₃C₂, or Mo₂C, which is having a superior conductivity in the range of 250-300 S/cm, compared to the respective transition metal carbide known in the prior art.

Such BPPs for fuel cells are generally comprising an electrically conductive main body and an electrically conductive coating, wherein the electrically conductive coating comprises a binding material/binder and at least one transition metal carbide obtainable by the inventive process as electrically conductive filler.

In particular, the binder forms a matrix material in which the one or more fillers are distributed. For example, the binder partially or completely wets the individual filler particles, in particular depending on a pigment volume concentration in the coating. It can be advantageous to use a silane-modified polyurethane binder. Preferably, the binder is formed by chemical reaction of at least two components. A first component of the at least two components preferably comprises a bi- or polyfunctional isocyanate compound or is formed therefrom. A second component of the at least two components preferably comprises one or more compounds which have at least two hydroxyl groups or amino groups, or is formed therefrom. The binder is preferably based on a polyurethane or a polyurea, which is formed in particular by an addition reaction of the hydroxyl groups or amino groups of the second component with the isocyanate groups of the first component. When using one or more compounds which have at least two hydroxyl groups or amino groups as the second component, polyurethane/polyurea copolymers are formed in particular. The binder preferably has predominantly or entirely thermoset properties. In particular, they enable optimised corrosion resistance of the BPP. In particular, the binder, which has predominantly thermoset properties, has optimised resistance to organic solvents and/or to acidic or alkaline aqueous solutions. In particular, the binder with predominantly thermoset properties is temperature-resistant, for example in the continuous operation of a fuel cell up to approx. 100 °C, and/or chemically and/or physically resistant (unaltered) to a fuel cell environment.

Thus, the present invention also contemplates a fuel cell, in particular a PEMFC, comprising a BPP and at least one transition metal carbide obtainable by the inventive process as defined before.

Thus, the present invention discloses:
**Production Method:** Transition metal carbides are synthesized in high-energy ball mills, such as Eₘₐₓ mills, as well as vertical and horizontal attritor mills. These processes are conducted under an inert atmosphere using solid starting materials and a mechanical energy applied on the material required 5-50 mJ per collision and gram of balls.

**Scale of Synthesis:** Laboratory-scale synthesis of transition metal carbides is carried out in high-energy ball mills and at larger scale with horizontal and vertical attritor mills with vessel capacities of 1 L, 20 L or several 100 L. An attritor mill of the Simoloyer mill type is available up to vessel sizes of 900 L, other mills are available with even bigger vessels.

**Vessel Materials:** The vessels and milling balls used for synthesizing transition metal carbides are made from ceramic materials, including silicon nitride, aluminum oxide, zirconia, and/or stainless steel.

**Electrical Conductivity:** Transition metal carbides synthesized in high-energy ball mills, such as Eₘₐₓ mills, as well as vertical and horizontal attritor mills exhibit enhanced electrical conductivity compared to the commercially available ones.

**Contamination Control:** When synthesized at larger scales (1 L, 20 L and larger sizes), transition metal carbides show reduced contamination levels, due to shorter milling times. Application: Transition metal carbides synthesized in high-energy ball mills, such as Eₘₐₓ mills, as well as vertical and horizontal attritor mills exhibit enhanced electrical conductivity compared to the commercially available ones, are good conductive filler materials for the bipolar plates used in PEM fuel cells.

The present invention is further illustrated by the attached Figures and Examples. In the Figures, it is shown:
Figure 1: shows X-ray diffraction patterns, where the detected intensity of the diffracted radiation is plotted against 2Theta, of Ti-C powder mixture at different milling times. (a), (b), (c), (d) and (e) show the results after milling time of 20 min, 40 min, 60 min, 90 min and 105 min, respectively.
Figure 2a and 2b show X-ray diffraction patterns of a mixture of three different chromium carbides: Cr₃C₂, Cr₃C₇ and Cr₂₃C₆ at different milling times. (a), (b), (c), (d), (e), (f) and (g) show the results after milling time of 1 h, 2 h, 3 h, 4 h, 5 h, 6 h as well the mixture of chromium carbides milled for as 6 h and annealing for 2 h at 800 °C under argon atmosphere, resulting in a single phase Cr₃C₂, respectively.
Figure 3 show X-ray diffraction patterns of Nb-C powder mixture at different milling times. (a), (b), (c), (d), (e) and (f) show the results after milling time 1 h, 2 h, 3 h, 4 h, 5 h, and 6 h, respectively.
Figure 4 shows X-ray diffraction patterns of V-C powder mixture at different milling times. (a), (b), (c), (d), (e), (f) and (g) show the results after milling time 1 h, 2 h,3 h, 4 h, 5 h, 6.5 h and 7.5 h, respectively.
Figure 5 shows X-ray diffraction patterns of Mo-C powder mixture at different milling times. (a), (b), (c), (d), (e) and(f) show the results after milling time 2 h, 4 h, 6 h, 8 h, 10 h, 11 h, respectively.
Figure 6 shows X-ray diffraction patterns of Ti powder milled under nitrogen at different milling times. (a), (b), (c), (d), (e) and(f) show the results after milling time 2 h, 4 h, 8 h, 12 h, 16 h, 20 h, respectively.
Figure 7 illustrates the measurement setup for the determination of the through-plane conductivity.
Figure 8 shows contact resistance values in mOhm*cm² plotted against the applied compaction pressure in N/cm² for stainless steel plates coated with a commercial graphite, the synthesized metal carbides and the synthesized TiN as filler.
Figure 9 shows Contact resistance values for stainless steel plates coated with commercial Cr₃C₂ and synthesized Cr₃C₂ as filler.
Figure 10a and 10b show Contact resistance values for metallic plates coated with different Cr₃C₂ and Mo₂C filler contents.
Figure 11 illustrates the XRD pattern of progression of Cr₃C₂ synthesis in a 1 L horizontal attritor mill.

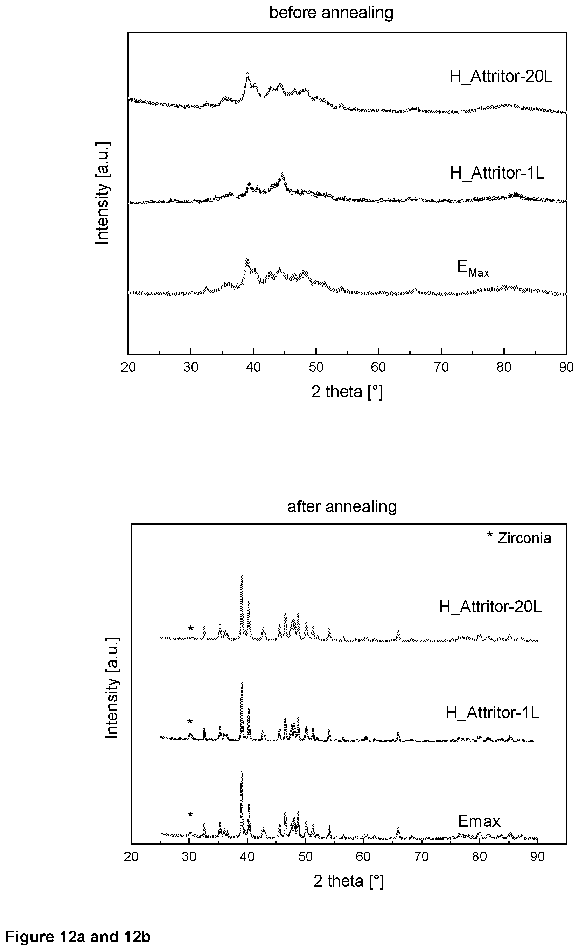

Figure 12a and 12b illustrate XRD patterns of Cr₃C₂ at different scales a) before and b) after annealing.
Figure 13 illustrates the setup for measuring the powder resistance values with gold electrodes and wiring of the setup using a 4-wire resistance measurement mode.
Figure 14 illustrates the setup modification at the bottom electrode to achieve homogeneous pressure distribution in the powder column.
Figure 15a and 15b illustrates the powder resistance values, expressed in ohm, plotted against the applied pressure in bar, of both Cr₃C₂ samples. The square data points are recorded before and the round data points are recorded after the pressure redistribution (pulling out the metal rods under the plate at the bottom electrode). a) Commercial carbide. b) Synthesized carbide.
Figure 16 illustrates the correlation between the minimum powder resistance and through-plane conductivity measurements in ohm versus mohm*cm².

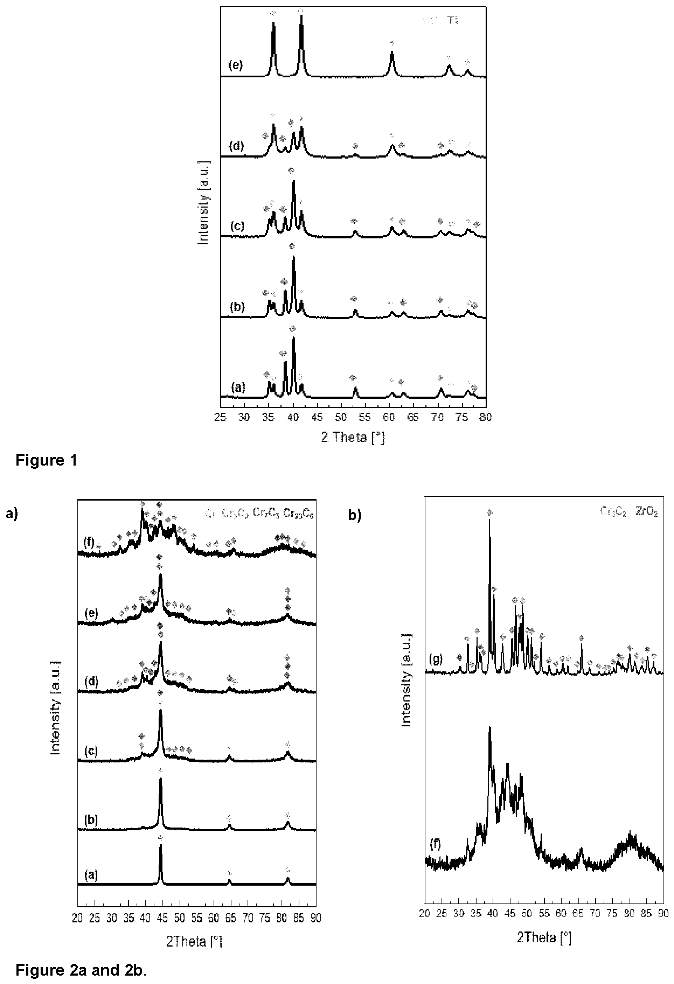

The formation process of the titanium-graphite powder mixture monitored by X-ray diffraction analysis, where the detected intensity of the diffracted radiation is plotted against 2Theta, is shown in Figure 1. After 20 min of milling time, weak TiC reflections could be detected in addition to the titanium reflections. As the milling time increased, the titanium reflections became broader and the TiC reflections increased in intensity. TiC formation was complete after 105 min of milling. An energy-dispersive X-ray analysis was performed to check possible contamination from the zirconia milling media (jar and balls) caused by the excessive impact energy during the milling time. Due to the short mechanical milling time, the contamination level of TiC was kept below 0.5 wt. % ZrO₂.

The X-ray diffraction patterns of the chromium-graphite powder mixture for different milling times are shown in Figure 2a. After 2 h of milling, only reflections of the chromium powder were observed. Further milling reduces the reflections and increases the width of the reflections. The formation of a predominantly amorphous structure occurred after a milling time of 6 h, where there are very broad background features, indicating a high fraction of amorphous material, on which several reflections were superimposed, which could be indexed to three different chromium carbides: Cr₃C₂, Cr₇C₃ and Cr₂₃C₆. A complete set of reflections corresponding to crystalline Cr₃C₂ was observed in the sample milled for 6 h and annealed at 800 °C under argon atmosphere. It appears that this predominantly amorphous structure, with these broad background features superimposed by reflections of three chromium carbides, is the precursor to the Cr₃C₂ formation. Another observation on the XRD pattern was an additional small reflection corresponding to zirconia, resulting from the contamination by the milling media caused by the long milling. According to energy-dispersive X-ray analysis, the contamination level of Cr₃C₂ was kept below 1.6 wt. % ZrO₂ (Figure 2b).

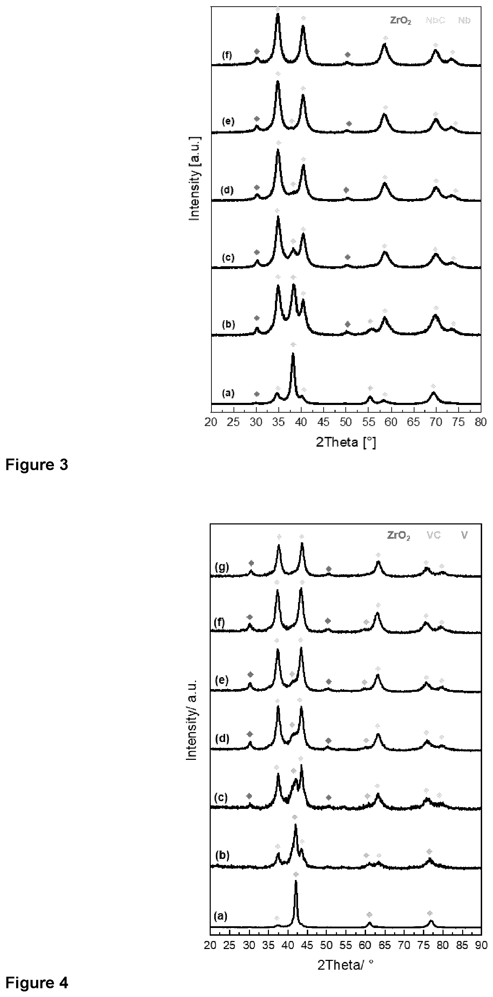

The conversion of niobium powder to NbC is shown in Figure 3. After 1 h of milling, the formation of weak NbC reflections was observed in addition to the Nb reflections. Further milling leads to a decrease in the intensity of the Nb reflections and an increase in the intensity of the NbC reflections. After 6 h of milling, the niobium reflections disappeared and only the NbC reflections could be found. Similar to the XRD pattern of Cr₃C₂, additional small zirconia reflections were detected. The results of the energy-dispersive X-ray analysis showed a contamination level of NbC of approximately 13 wt. % ZrO₂.

The XRD patterns of the milled vanadium-graphite powder mixture reported for different milling times under argon atmosphere are shown in Figure 4. After milling for 2 h, the reflections of V broaden due to the formation of VC. Further milling results in a decrease in the V reflections and an increase in the VC reflections. After a milling time of 6 h, the V reflections disappeared completely and only the VC reflections could be observed. However, additional small zirconia reflections could be detected, caused by the ZrO₂ milling media. According to energy-dispersive X-ray analysis, the contamination level of VC was kept at 11.0 wt. % ZrO₂.

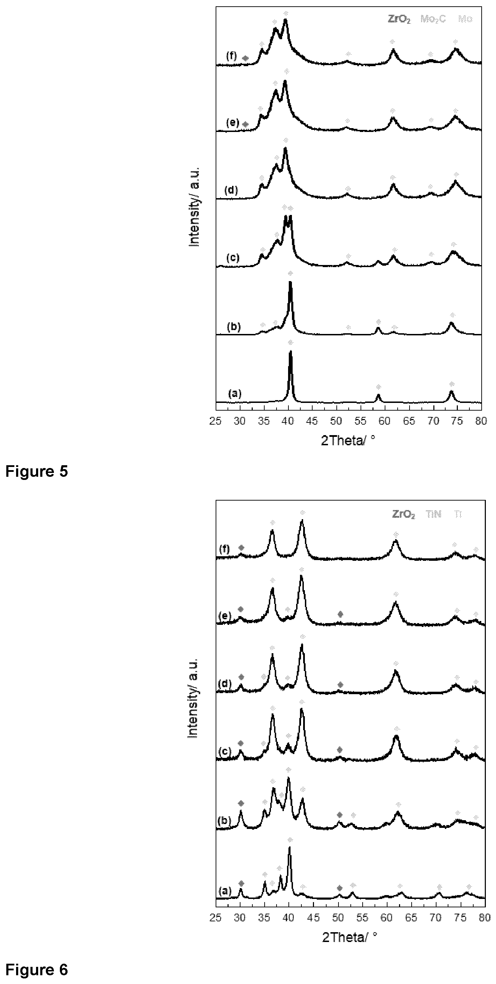

The formation process of the molybdenum-graphite powder mixture monitored by X-ray diffraction analysis is shown in Figure 5. After 2h of milling time, only reflections of the molybdenum powder were observed. Further milling results in a decrease in the reflections of Mo and an increase in the reflections of Mo₂C. After a milling time of 11 h, the Mo reflections disappeared completely and only the Mo₂C reflections could be observed. The results of the energy-dispersive X-ray analysis showed a contamination level of Mo₂C of approximately 2.0 wt. % ZrO₂.

The XRD patterns of titanium powder milled under nitrogen atmosphere for different milling times are shown in Figure 6. After 2 h of milling time, weak TiN reflections could be detected in addition to the titanium reflections. As the milling time increased, the titanium reflections became broader and the TiN reflections increased in intensity. TiN formation was complete after 20 h of milling. According to energy-dispersive X-ray analysis, the contamination level of TiN was kept at 11.0 wt. % ZrO₂.

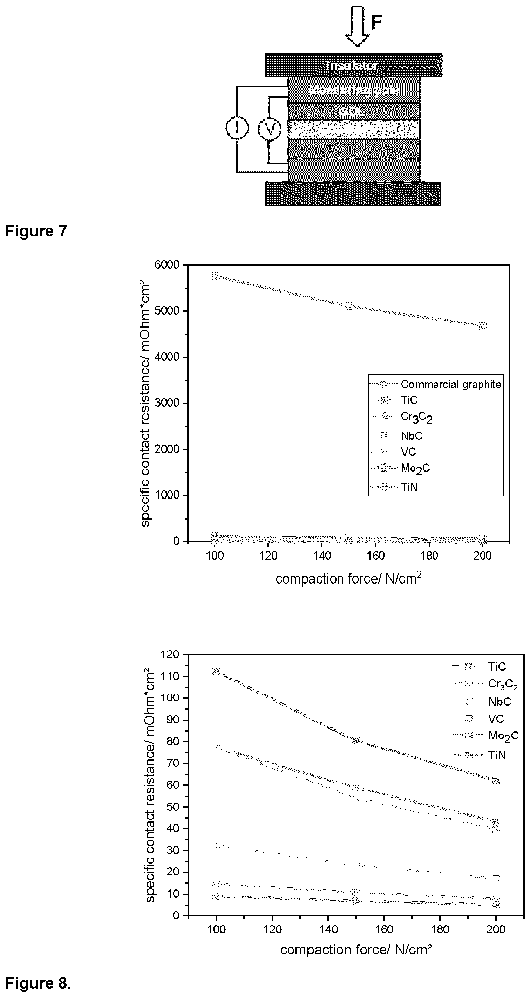

Figure 7 shows the measurement setup for the determination of the through-plane conductivity. The coated metal plate is sandwiched between two gas diffusion layers (GDL) followed by two measuring poles (Au-coated copper plates). By measuring the total voltage drop through the setup, to which a constant current (in a 3.7 A range) is applied as the compaction force is increased, the total resistance can be calculated.

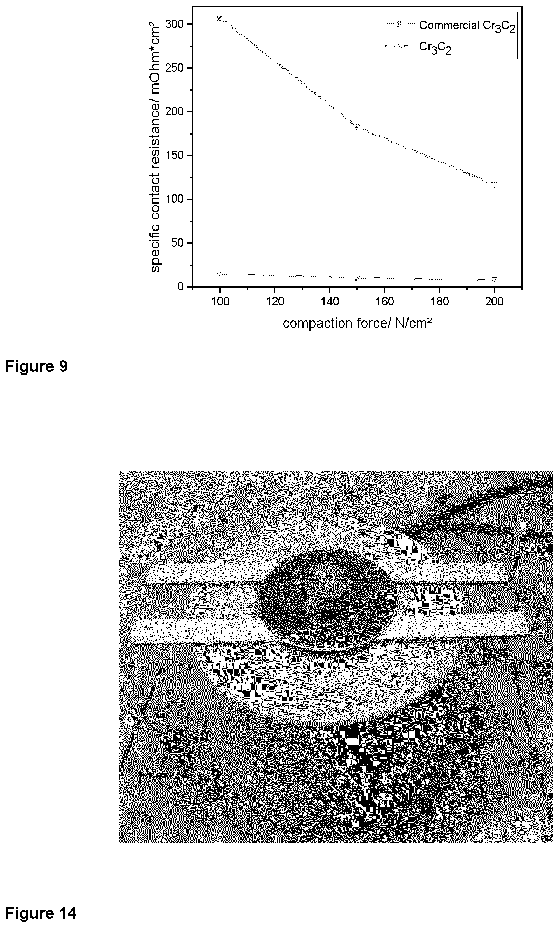

Coatings were formulated using a polymeric binder matrix (a polyurethane-based binder was used, but other binder materials such as fluoropolymer, expoy resin, acrylic or rubber-based binders may also be suitable) into which the electrically conductive filler material was incorporated. Metallic plates were coated using a doctor blade with a gap of 38 µm (wet paint technique) and placed in an oven at 150 °C for 15 minutes to cure. The fillers used were a commercial graphite from Graphit Kropfmühl GmbH (purity 99.0 %, particle size <16 µm), which is referred to as the standard filler, a commercial Cr₃C₂ from Sigma Aldrich (purity 99.0%, particle size 45µm) and the mechanochemically synthesized metal carbides and nitrides. Through-plane contact resistance values (setup from EKPO, schematic drawing is shown in Figure 7) were measured as a function of the compaction pressure for coated stainless steel plates. The resistance values of the graphite coated samples were in the range of 4500-6000 mOhm*cm², the plates with the commercially available Cr₃C₂ showed values between 120-310 mOhm*cm², while those with the different mechanochemically synthesized coated carbides and nitrides showed values between 5-115 mOhm*cm², i.e. consistently lower values than the commercial fillers. The TiN coated stainless steel plates had the highest contact resistance values of the synthesized fillers. It was observed that among the metal carbides, the steel plates with Mo₂C and Cr₃C₂ as fillers had the highest through-plane conductivity (Figure 8 plots the contact resistance values in mOhm*cm² against the applied compaction pressure in N/cm²). A comparison of the commercially available Cr₃C₂ and the synthesized Cr₃C₂ showed significant differences in the specific contact resistance. The metal plates coated with the synthesized Cr₃C₂ obtained according to the inventive process had by far the highest through-plane conductivity, i.e. a contact resistance of only 8-15 mOhm*cm² (Figure 9).

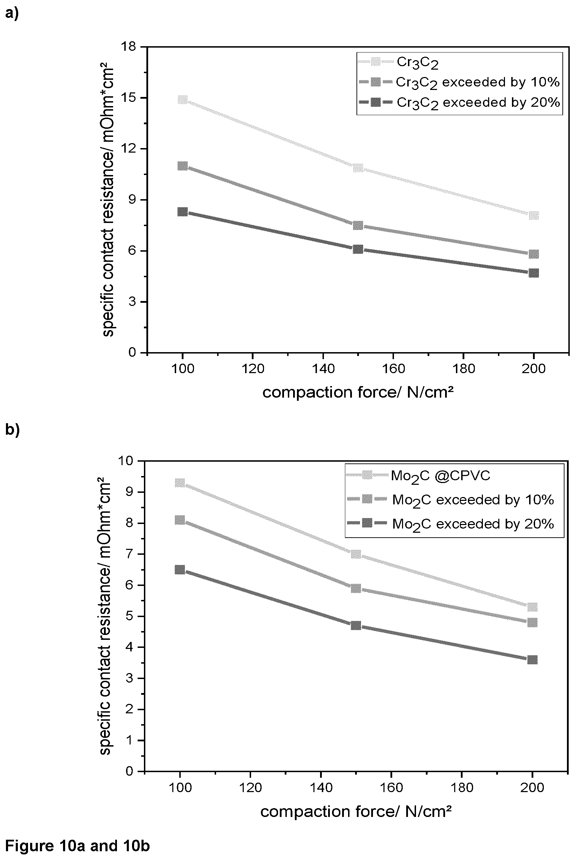

In order to increase the conductivity and meet the US Department of Energy's technical target value of < 10 mOhm*cm² for the specific contact resistance of bipolar plates for transportation applications, Cr₃C₂ and Mo₂C were incorporated into the coating, exceeding the Critical Pigment Volume Concentration (CPVC) by 10 % or 20 %, respectively. The desired resistivity value was achieved by increasing the amount of electrically conductive material. Stainless steel plates with 20 % more filler content had a higher electrical conductivity than those with 10 % more filler. In addition, Cr₃C₂ coated plates had overall lower contact resistance values than the Mo₂C coated sheets (Figure 10a-b). One reason for this could be the higher volume in both cases, with 10% and 20% more Cr₃C₂ filler content (due to the lower density of Cr₃C₂ compared to Mo₂C), which leads to more contact points between the particles and therefore to higher conductivity.

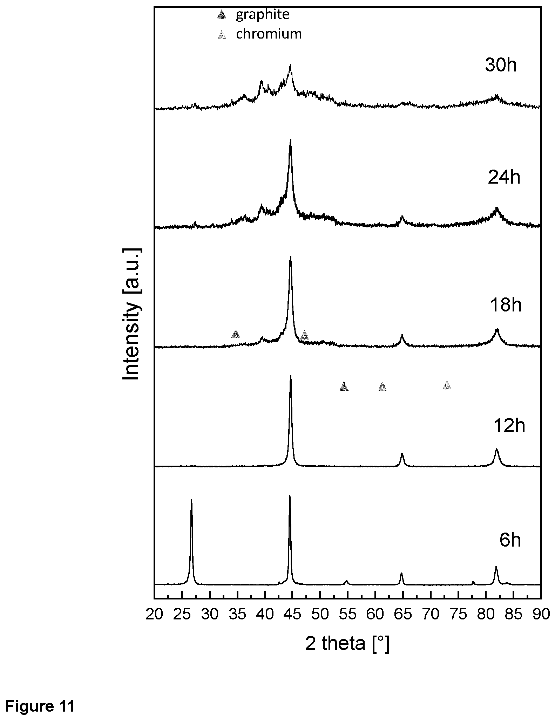

Figure 11 illustrates the conversion progression of the precursors into the final chromium carbide phase during milling in a 1L horizontal attritor mill (H-Attritor-1L). The initial graphite reflection disappears after 6-12 hours of milling, while the chromium reflections broaden, indicating a reduction in particle size. By 18 hours, reflections corresponding to chromium carbide phases begin to emerge, and after 24 hours, these reflections dominate. After 30 hours of milling, the final phase achieved is comparable to that of materials synthesized in an Eₘₐₓ mill. This is further demonstrated in the following graph, which presents XRD patterns of samples produced in an Eₘₐₓ jar and in horizontal attritor mills with vessel sizes ranging from 1 to 20 liters. The XRD patterns displayed above confirm that the final phase of the product remains consistent across the different production scales. Regardless of the scale-whether at the lab (Eₘₐₓ), intermediate (H-Attritor-1L), or larger production scale (H-Attritor-20L)-the characteristic peaks observed in the XRD spectra are nearly identical, indicating that the crystalline structure of the final product has been successfully replicated. With the experimental conditions outlined and the material specifications provided, the proposed process consistently leads to the desired final product across all scales. This consistency is critical for ensuring that the scaling-up process does not affect the phase purity or the material's crystalline properties.

### Powder conductivity measurement of both commercial and synthesized Cr₃C₂

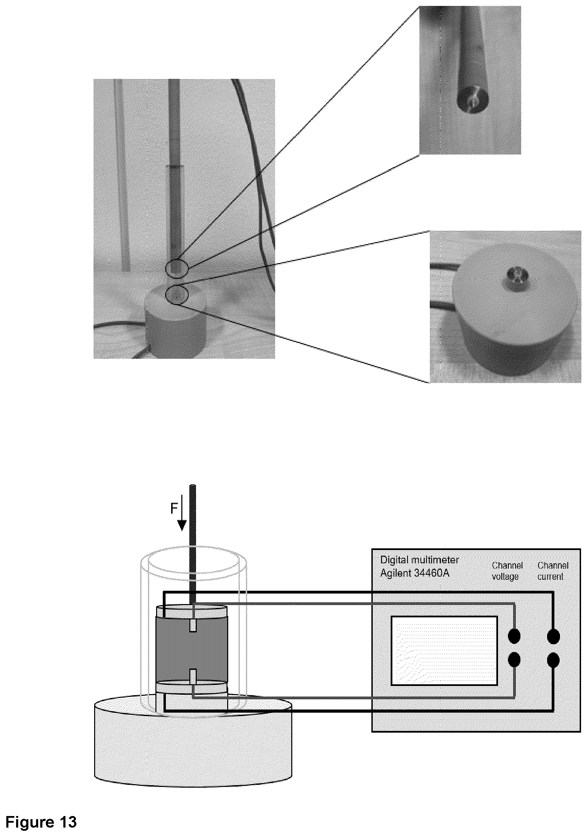

In addition to the characterization of the coated metal plates, the powder conductivity of the commercial and synthesized Cr₃C₂ was determined. For this purpose, the powder was filled into a glass tube and sandwiched between two gold electrodes consisting of gold plates with gold pins (the setup design and a schematic drawing are shown in **Figure 13****).** A pneumatic press connected to the compressed air line was used to increase the compaction force by pushing down a piston (the pressure ranged between 4.0 -52.5 bar). The setup is connected to a digital multimeter where the total voltage drop is recorded in a 4-wire resistance mode while a constant current (in the range of 1 mA) is applied. The current is passed through the gold plates, while the voltage is measured across the pins. For both samples, a specific amount of powder was used so that the pin-pin distance in the setup is about 5 mm, which was 2 g.

To achieve a homogeneous pressure distribution in the powder column, two metal rods were placed under a small metal plate on the bottom electrode and the rods were pulled out under this plate at a pressure of 18 bar **(****Figure 14****).** This design redistributes the pressure at the bottom electrode, resulting in similar pressures at the top and bottom electrodes, which is an important factor in determining the electrical conductivity of a powder column.

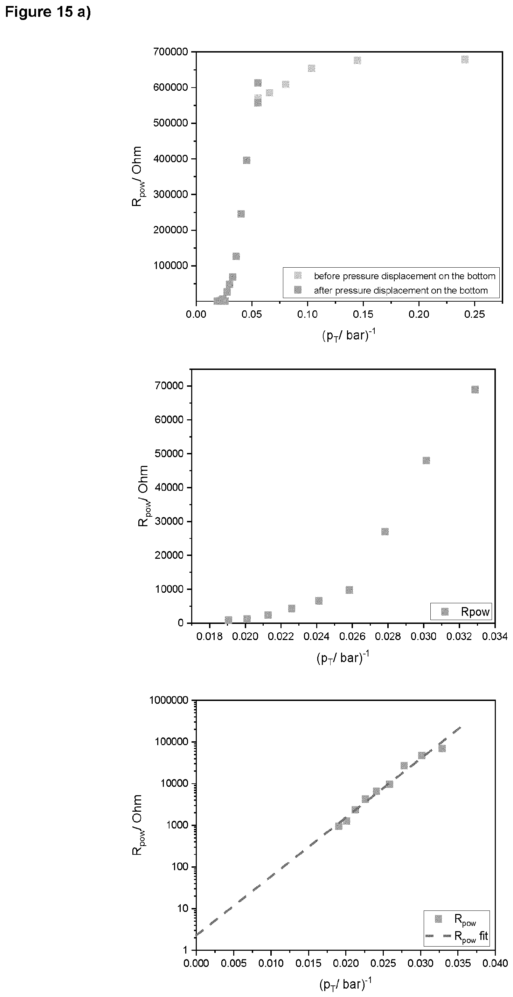

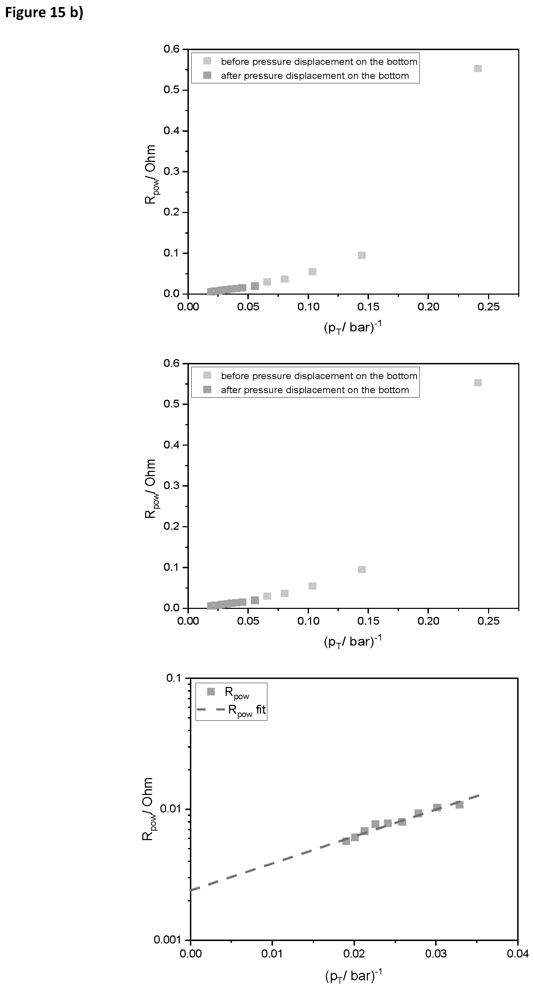

For both Cr₃C₂ samples, it was observed that the powder resistance decreases with increasing pressure. The powder column becomes denser and the contacts between the particles increase, resulting in higher conductivity. For analysis, the measured data points were plotted logarithmically, fitted, and by extrapolating the linear curves, the minimum powder resistance at infinitely high pressure could be determined on the y-axis. Comparison of the two carbide samples showed that the powder resistance, a first measure of electrical properties, of the mechanochemically synthesized Cr₃C₂ was three orders of magnitude lower than that of the commercially available Cr₃C₂ (0.0024 Ohm vs. 2.3 Ohm) (Figure 15a and 15b, where the powder resistance in ohm is plotted against the applied pressure in bar). Taking into account the area of the gold electrodes and the height of the powder column, the electrical resistivity can be calculated according to: $ρ = {R}_{pow} ⋅ \frac{A}{l}$ where *R_{pow}* is the extrapolated minimum powder resistance at infinite high pressure, A is the area of the gold electrodes, and *l* is the length of the powder column.

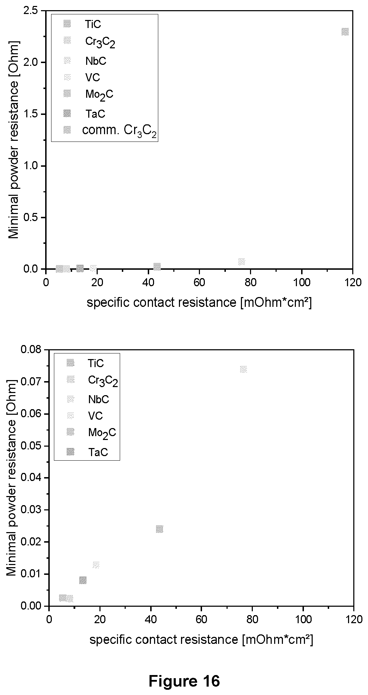

The electrical resistivity, the reciprocal of the electrical conductivity, for commercial and synthesized Cr₃C₂ was 3047608 µOhm*cm and 3562 µOhm*cm, respectively, considering these two parameters, gold electrode area and powder column height, at a final pressure of 52 bar. This results in an electrical conductivity of 0.33 S/cm and 278 S/cm, which again confirms the fact that the mechanochemically synthesized carbides have a higher conductivity than the commercial ones, as they reflect the values of the through-plane contact resistance, where the samples coated with the synthesized Cr₃C₂ already showed a higher conductivity than the commercial Cr₃C₂. Plotting the minimum powder resistance against the specific contact resistance of the coated plates of all synthesized carbides and commercial Cr₃C₂ shows a linear trend between these two conductivity measurements. It can be concluded that these two parameters are correlated. From the obtained results of both commercial and synthesized Cr₃C₂, as shown in Figure 16, it can be concluded that the mechanochemically synthesized carbides have higher conductivities compared to the commercial ones using the conventional high temperature processes.

### Experimental Section

### Exemplary Preparation for the synthesis of titanium carbide in an high-energy ball mill

The preparation was performed in a glove box to prevent the formation of oxides. 1.43 g titanium powder and 0.36 g graphite were added to a 50 ml zirconia jar with zirconia milling balls (4x ø 10 mm and 50x ø 5 mm) and sealed in an argon atmosphere. The powder mixture was milled at 1000 rpm for 1.75 h (milling interval: 10 min milling time followed by 1 min pause) in a scalable high-energy ball mill E₋ₘₐₓ. At the end of milling process, the powder mixture was scratched out of the milling jar.

In addition to the preparation of titanium carbide, carbides of other transition metals were prepared in the same manner. An additional process step was required for the chromium carbide synthesis, as the as-milled chromium-graphite powder mixture was annealed for 2 h at 800°C (heating rate 10 °C/min) in a tube furnace under argon atmosphere to produce a single-phase Cr₃C₂.

The exact reaction time and powder loadings used for the indicated carbide syntheses are given in Table E1.

**Table E1. Mechanochemical parameters for the synthesis of transition metal carbides.**

| Transition metal carbides | Metal carbide [g] | Graphite [g] | Molar ratio | Amount of ZrO₂ balls ^{a)} | BPWR ^{b)} | Milling time [h] |
|---|---|---|---|---|---|---|
| TiC | 1.43 | 0.36 | 1:1 | 4x ø 10 mm + 50x ø 5 mm | 19:1 | 1.75 |
| Cr₃C₂ | 2.34 | 0.36 | 3:2 | 4x ø 10 mm + 50x ø 5 mm | 13:1 | 6 |
| NbC | 1.86 | 0.24 | 1:1 | 4x ø 10 mm + 50x ø 5 mm | 16:1 | 6 |
| VC | 1.53 | 0.36 | 1:1 | 4x ø 10 mm + 50x ø 5 mm | 18:1 | 7.50 |
| Mo₂C | 2.88 | 0.18 | 2:1 | 4x ø 10 mm + 50x ø 5 mm | 11:1 | 11 |

| | | | | | | |
|---|---|---|---|---|---|---|
| ^{a)} weight of a ø 5 mm ZrO₂ ball is 0.54 g and of a ø 10 mm ZrO2 ball is 3.1 g. ^{b)} ball to powder weight ratio | | | | | | |

### Method for Scale-Up of Transition Metal Carbides Using a Scalable High Energy Attritor mill

The milling experiments were performed using 1L-8L-20L scalable attritor mills. In a typical experiment, the milling vessel was loaded with the starting powders and milling balls (5-15 mm in diameter) at a desired BPWR (defined in eq. 1.) in a protective atmosphere. Prior to milling, the atmosphere inside the vessel was replaced by evacuating air using a vacuum pump, followed by flushing the vessel with argon gas three times to ensure atmospheric air was replaced. The vessel was then filled with argon to a pressure of approximately 0.5 bar (gauge) to prevent oxidation during the milling process. The materials of the milling vessel and the balls can be stainless steel, zirconia, aluminum oxide or silicon nitride. More preferably, zirconia vessel with zirconia balls create the hardness and the energy necessary for the conversion. $BPWR = \frac{total weight of milling balls used}{weight of starting powder} ,$ (eq. 1) where BPWR: ball to powder ratio.

The milling operation began by starting the cooling water system to maintain a stable temperature between 25-60°C during the milling process. The milling parameters, including speed (400-1500 rpm), duration, and pause intervals(at least 15 min), were controlled according to vessel size ensuring 5-50 mJ per collision and gram of balls. Temperature sensors and pressure connections were monitored continuously to ensure stable conditions throughout the milling experiment.

### Energy Calculations

For a 1 L cylindrical vessel with a radius of 10 cm, an effective volume was determined to be the annular region between 6 cm and 8 cm in radius around the axis of the rotor of the attritor mill. Using the volume formula for a cylinder, it was calculated that this effective volume accounts for 28% of the total vessel volume. Under the assumption that the balls interacting with the tip of the blades will be effective for the chemical transformation; the total number of balls was multiplied by the effective volume. For a 1 L vessel, using 1000 balls, the effective number of balls will be 280.

The linear velocity of the balls hit by a blade within the effective volume will also be affected and thus calculated accordingly. The effective linear velocity of a ball in a 1 L vessel will be around 4 m/s. The energy of collision, calculated using the effective linear velocity and normalized by the mass of a ball, will be around 10 mJ. The energy per collision per gram of the balls was kept almost constant across all scales of the synthesis, allowing the milling speed to be calculated for different scales accordingly. The effective energy per collision per gram of ball should be in the range of 5-50 mJ to ensure material production.

The calculated energy of collision without any assumptions of the effective volume (assuming all balls hit the blades, all balls are in motion, and every interaction is perfectly elastic) is given by the formula 1/2 * M_balls * V², which results in a range of 15-200 mJ per collision per gram of a ball.

### Example 1: Scale-Up to 70g of Cr₃C₂ in a 1L Vessel:

A mixture of 59g chromium, 9g graphite, and 800g of zirconia balls (5mm) is loaded into a 1L horizontal attritor mill under an argon atmosphere. The milling process is conducted in 30 cycles, each consisting of 20 seconds at 500 rpm, followed by 100 seconds at 950 rpm, with a 15-minute break between cycles. The milling is conducted over a total duration of 6 hours, which is repeated 6 times to achieve the desired final material. The final mixture contains various carbide phases, which are then annealed at 800°C for 2 hours.

### Example 2: Scale-Up to 1.5 kg of Cr₃C₂ in a 20L Vessel:

A mixture of 1325g chromium, 204g graphite, and 20kg of zirconia balls (5mm) is loaded into a 20L horizontal attritor mill under an argon atmosphere. The milling process is conducted in 30 cycles, each consisting of 20 seconds at 400 rpm, followed by 100 seconds at 600 rpm, with a 15-minute break between cycles. The milling process is repeated 6 times to achieve the desired carbide phases. The final product is subsequently annealed at 800°C for 2 hours.

Impurities present a significant challenge in synthesis of a material, as they influence the properties of the final product. The level of impurities ultimately defines the suitability of the material for its intended application. In the inventor's studies, various types of ball milling media have been investigated to identify those that provide sufficient hardness while minimizing abrasion. Experiments were conducted using different machinery across various scales. In the Eₘₐₓ mill, zirconia jars and zirconia balls were used as the milling media. The 1L horizontal attritor mill featured a stainless steel vessel lined internally with silicon nitride, also employing zirconia balls for milling. In contrast, the 20L vessel, made of stainless steel, again utilized zirconia balls.

To guarantee product quality and consistency, the conversion to the desired final phase (Cr₃C₂ phase) was monitored using XRD analysis. Additionally, the contamination from the milling media were evaluated through EDX analysis. Samples from the processed batches were tested for final composition, electrical conductivity, and particle size, ensuring consistent product quality across all runs.

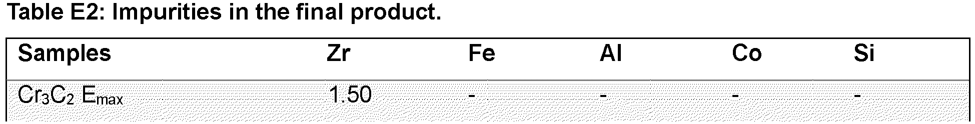

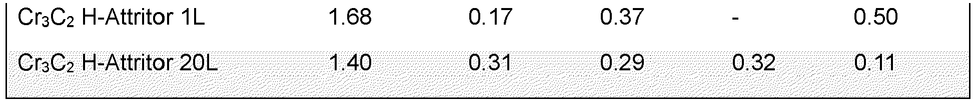

Table E2 lists the impurities detected in the samples produced during the scale-up process, attributed to the milling media used. The inventor's findings indicate that, as the size of the vessel and the length of the blades increase, the milling time required for complete conversion decreases, resulting in reduced abrasion as the scale of the operation grows. This has never observed before the decrease in time necessary for the milling as the scale gets larger, and the decrease in the impurities accordingly. Zirconia impurities are generally inconsequential for most applications and can even enhance the stability of the final product at elevated temperatures. However, it was intended to avoid silicon nitride, iron and cobalt impurities, despite their presence currently being within acceptable application limits. As the synthesis of the transitional metal carbides are possible with ceramic and stainless steel milling media, the options are available.

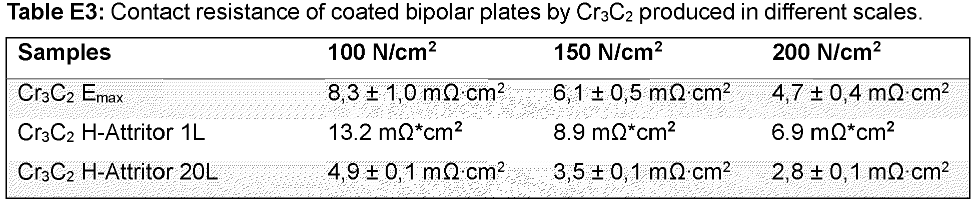

The contact resistance was measured using through-plane-conductivity methods as represented in the schematic drawing of Figure 7, which provide insights into the electrical conductivity of the final product. The inventor's primary interest lies in the electrical conductivity of the coated bipolar plates produced in the inventive processes. The measured contact resistance serves as a key indicator of this conductivity. As detailed in the table above, variations in contact resistance are observed across different production scales. Notably, the application of pressure on the samples effectively reduces contact resistance by enhancing the contact area between the plates.

The differences in contact resistance between the Eₘₐₓ (final amount:3 g) and the H-Attritor mill-1L (~70 g) can be attributed to a non-converted chromium; this comparison represents a transitional study that could be further optimized. However, the final stage involving the H-Attritor-20L mill (1.5 kg) demonstrates a significantly lower contact resistance than that produced at smaller scales. This improvement can likely be attributed to the greater forces applied during processing, resulting in fully converted chromium and reduced particle sizes.

### Coating formulation preparation

Coating formulations were prepared for each individual filler material at the critical pigment volume concentration, the volume ratio of filler to binder in the cured coating film at which the fillers are completely covered by the binder. This characteristic was determined using the oil adsorption number, where 1 g of synthesized metal carbides is placed on a glass plate and the amount of refined linseed oil (DIN EN ISO 150) is added until a homogeneous paste is formed. The ratio of filler to binder can be determined from the calculated oil adsorption number and the density of the carbides and the linseed oil **(Equations S1 and S2).** Their exact values are given in **Table E4.** To formulate the coating itself, TolonateTM HDT LV (hardener) was mixed with p-xylene in a beaker and SilquestTM A-1170 (adhesion promoter) was added drop by drop. The mixture was covered and allowed to post-react. In a second beaker, binder material, p-xylene and DISPERBYK-180 (dispersing agent) were added to the amount of filler. The mixture of the two components was stirred for 10 minutes at a high stirrer speed (> 1000 rpm). For each filler material, 10 g of paint was prepared. The exact values of the individual components of each formulation are shown in **Table E5.**

### Wet paint coating

Prior to coating, the stainless steel 316L plates were cut to a size of 50 mm x 180 mm and were acid pre-treated to remove the oxide layer and metal contaminants. A 10 wt.% of Polinox UB A (a solution of phosphoric acid, sulfuric acid and etidronic acid) was heated to 60 °C, in which the substrates were immersed for 10 minutes. The samples were then rinsed with distilled water and air dried. The formulated lacquer was applied to the pre-treated metal plates using a doctor blade with a 38 µm gap (dried film thickness: 10-20 µm) and placed in an oven at 150 °C for 15 minutes to cure. The same process was repeated on the other side of the metal sheet.

**Table E4. Oil adsorption numbers of the metal carbides and the filler to binder ratios in the in the formulated coatings.**

| Transition metal carbide | Filler [g] | Linseed oi [g]l | Oil adsorption number | Filler volume ^{a)} [vol.%] | Binder volume ^{a)} [vol. %] |
|---|---|---|---|---|---|
| TiC | 1.05 | 0.28 | 27 | 41.2 | 58.8 |
| Cr₃C₂ | 1.01 | 0.19 | 19 | 42.6 | 57.4 |
| NbC | 1.01 | 0.28 | 27 | 30.5 | 69.5 |
| VC | 1.02 | 0.27 | 26 | 37.8 | 62.2 |
| Mo₂C | 1.01 | 0.16 | 16 | 39.2 | 60.8 |

| | | | | | |
|---|---|---|---|---|---|
| ^{a)} Total volume concentration of the filler and binder in a dried coating layer. | | | | | |

**Table E5. Component weights used to formulate the coatings.**

| | Component 1 | | | Component 2 | | | |
|---|---|---|---|---|---|---|---|
| Transition metal carbide | Tolonate HDT-LV [g] | SilquestTM A-1170 [g] | P-Xylene [g] | Binder [g] | P-Xylene [g] | DISPERBYK-180 [g] | Filler [g] |
| TiC | 0.84 | 0.12 | 0.96 | 1.66 | 0.29 | 0.18 | 5.94 |
| Cr₃C₂ | 0.64 | 0.09 | 0.73 | 1.26 | 0.65 | 0.19 | 6.44 |
| NbC | 0.85 | 0.12 | 0.97 | 1.68 | 0.29 | 0.18 | 5.93 |
| VC | 0.83 | 0.12 | 0.95 | 1.65 | 0.31 | 0.18 | 5.96 |
| Mo₂C | 0.57 | 0.08 | 0.65 | 1.12 | 0.78 | 0.20 | 6.61 |

### Determination of the oil adsorption number (OA) and the critical pigment volume concentration (CPVC) of the filler

$OA = \frac{{m}_{linseed oil} \times 100}{{m}_{filler}}$ (S1) where *m_{linseed oil}* and *m_{filler}* are the masses used in [g]. $CPVC = \frac{100}{1 + \frac{OA \times {ρ}_{filler}}{100 \times {ρ}_{linseed oil}}}$ (S2) where *ρ_{linseed oil}* and *ρ_{filler}* are the densities used in [g/cm³].

As show above, the present invention provides a superior process for preparing transition metal carbides, the so-obtained transition metal carbides, in particular Cr₃C₂, and the use thereof as electroconductive particles, in particular as filler materials for coated metallic bipolar plates (BPP) in fuel cells PEMFC.

## Claims

1. Process for preparing a transition metal carbide, said process comprising the steps of mixing a transition metal powder and a carbon powder in a molar ratio in the range of 1:1 to 2:1, depending on the desired transition metal carbide, and subjecting the obtained mixture to a milling operation in a scalable high-energy ball mill with a milling vessel in the presence of milling bodies under an inert atmosphere,
wherein the milling vessel and the milling bodies are made from stainless steel or preferably a ceramic material, including silicon nitride, aluminum oxide and zirconia, and wherein the transition metal is selected from Ti, Zr, Hf, V, Nb, Ta, Cr, Mo or W.

2. Process for the production of a transition metal carbide according to claim 1 wherein the milling operation is conducted for a period of time of 2 to 24 hours, preferably 3 to 12 hours and preferably in a temperature range of 20°C to 80°C.

3. Process according to claim 1 or 2 wherein the milling operation is comprising discontinuous milling intervals, optionally with differing milling speeds and differing milling times.

4. Process according to any one of the preceding claims wherein the weight ratio of the milling bodies to mixture of the transition metal powder and the carbon powder is in the range of 50 to 5, preferably 30 to 10.

5. Process according to any one of the preceding claims wherein the total volume of the milling bodies to the volume of the high-energy ball mill is in the range of 1/20 to 1/5, preferably 1/15 to 1/8.

6. Process according to any one of the preceding claims wherein the transition metal is selected from Ti, Cr, Nb, V or Mo, preferably Cr.

7. Process according to any one of the preceding claims wherein the preferred carbides are TiC, Cr₃C₂, NbC, VC and Mo₂C, Cr₃C₂ being particularly preferred.

8. Transition metal carbide, obtainable by the process of any one of claims 1 to 7.

9. Transition metal carbide, obtainable by the process of any one of claims 1 to 7 and having a conductivity in the range of 10-300 S/cm.

10. Transition metal carbide, obtainable by the process of any one of claims 1 to 7, wherein the transition metal carbide is Cr₃C₂, or Mo₂C, having a conductivity in the range of 250-300 S/cm.

11. Use of the transition metal carbide of any one of claims 8 to 10 as electroconductive material.

12. Use of the transition metal carbide of any one of claims 8 to 10 as electroconductive filler material for coatings.

13. Use of the transition metal carbide of any one of claims 8 to 10 as electroconductive filler material for coatings wherein the coatings are used for bipolar plates for fuel cells.

14. Bipolar plate for fuel cells, comprising an electrically conductive main body and an electrically conductive coating, wherein the electrically conductive coating comprises a binding material and at least one transition metal carbide of any one of claims 8 to 10 as electrically conductive filler.

15. Fuel cell, in particular a PEMFC, comprising a bipolar plate as claimed in claim 14.
